Europäisches Patentamt

European Patent Office

Office européen des brevets

(11) Veröffentlichungsnummer: **0 451 523 A2**

(12) **EUROPÄISCHE PATENTANMELDUNG**

(21) Anmeldenummer: 91103816.4

(51) Int. Cl.5: **G06F 3/00**

(22) Anmeldetag: 13.03.91

(30) Priorität: 17.03.90 DE 4008667

(43) Veröffentlichungstag der Anmeldung:
16.10.91 Patentblatt 91/42

(84) Benannte Vertragsstaaten:
AT BE CH FR GB IT LI LU NL

(71) Anmelder: TELENORMA GMBH
Mainzer Landstrasse 128-146
W-6000 Frankfurt/Main(DE)

(72) Erfinder: Gitzen, Bernd, Dipl.-Ing.
Beringer Strasse 45
W-5530 Gerolstein(DE)
Erfinder: Maier, Wolfgang, Dipl.-Ing.
Gartenstrasse 63
W-6070 Langen(DE)
Erfinder: Gerhards Jürgen, Dipl.-Ing.
Asternweg 22
W-5000 Köln 90(DE)
Erfinder: Hickler, Gerhard, Dipl.-Ing.
Hanauer Strasse 65
W-6101 Messel(DE)

(54) Schaltungsanordnung zum Anschluss eines Rechners an einem digitalen Fernsprechendgerät.

(57) Die Schaltungsanordnung dient zum Anschluß eines eine eigene Stromversorgungseinrichtung aufweisenden Rechners an einem digitalen Fernsprechendgerät mit einem internen Bus-System, welches eine Schnittstelle für den Basisanschluß mit zwei Nutz- und einem Daten-/Signalisierungs-Kanal zur Verbindung mit einer digitalen Fernmeldevermittlungsanlage und u. a. einen Kanalschalter für die Verteilung bzw. Zusammenfügung der Nutzkanalinformationen zu/von einem Codec/Filter bzw. zu/von einer Schnittstelle zum Anschluß externer Einrichtungen aufweist, wobei der Rechner mit einer entsprechenden Anschlußschnittstelle versehen ist. Der Rechner (PC) ist an einem Leitungspaar zur Übertragung der Nutz-Kanal-Informationen und am internen Bus-System (IB) des Fernmeldeendgeräts (F) angeschlossen. Durch diese Maßnahme kann der Rechner (PC) nicht nur im Rahmen von Datenanwendungen, sondern auch zur Behandlung von Sprachsignalen, die über den Nutz-Kanal übertragen werden, eingesetzt werden.

Fig. 1

Die Erfindung betrifft eine Schaltungsanordnung zum Anschluß eines, eine eigene Stromversorgungseinrichtung aufweisenden Rechners an einem digitalen Fernmelde-, insbesondere Fernsprechgerät mit einem internen Bus-System, welches eine Schnittstelle für den Basisanschluß mit zwei Nutz- und einem Daten-/Signalisierungskanal zur Verbindung mit einer digitalen Fernmeldevermittlungsanlage und u. a. einen Kanalschalter für die Verteilung bzw. Zusammenführung der Nutzkanalinformationen zu/von einem Codec/Filter bzw. zu/von einer Schnittstelle zum Anschluß externer Einrichtungen aufweist, wobei der Rechner mit einer entsprechenden Anschlußschnittstelle versehen ist.

Ein derartiges digitales Fernsprechendgerät ist bereits bekannt. So wird in der Druckschrift TH-Nachrichten 1987, Heft 91, auf Seite 6 in Fig. 8 die Grundstruktur eines Digitalterminals gezeigt, welcher einen Integral-Adapter mit einer V.24-Schnittstelle zum Anschluß externer Einrichtungen aufweist.

Über die V.24-Schnittstelle ist auch der Anschluß eines Personalcomputers an dem digitalen Fernsprechendgerät möglich. In der Druckschrift TN-Nachrichten 1988, Heft 92, wird auf den Seiten 22 - 27 der Anschluß eines derartigen Rechners über eine V.24-Schnittstelle an einem digitalen Fernsprechdendgerät beschrieben.

Der Basisanschluß einer digitalen Fernmeldevermittlungsanlage weist zwei Nutz-Kanäle mit je 64 kbit/s und einen Daten-/Signalisierungs-Kanal mit 16 kbit/s auf. Die V.24-Schnittstelle ermöglicht dagegen nur die Übertragung von maximal 19,2 kbit/s. Die Aufgabe der Erfindung besteht nun darin, eine Schaltungsanordnung anzugeben, welche den Anschluß eines derartigen Rechners an einem digitalen Fernsprechendgerät ermöglicht, wobei höhere Datenübertragungsraten pro Zeiteinheit möglich sind.

Diese Aufgabe wird dadurch gelöst, daß der Rechner an einem ersten Leitungspaar zur Übertragung der Nutz-Kanal-Informationen in jeweils einer von beiden Richtungen und am internen Bus-System des Fernmeldeendgeräts angeschlossen ist.

Über den Kanalschalter des digitalen Fernmeldeendgeräts läßt sich die Übertragung der Nutzsignalinformationen steuern, während der Rechner ebenso wie andere Einrichtungen des Fernmeldeendgeräts am internen Bus-System desselben angeschlossen ist. Steuerungsmäßig wird somit der angeschlossene Rechner wie eine eigene Einrichtung des Fernmeldeendgeräts behandelt, d.h., daß in gewissen Anwendungsfällen eine Bedienung des Rechners über dessen Eingabetastatur nicht notwendig ist.

Es ist bereits bekannt, einen Personalcomputer mit einer entsprechenden Schnittstelle für den Basisanschluß auszustatten. So wird in dem ISDN-report Nr. 9, September 1989 auf den Seiten 27 - 31 ein sog. ISDN-PC-Controler beschrieben, welcher den Anschluß an die $S_o$-Schnittstelle mit zwei Nutz- und einem Daten-/Signalisierungs-Kanal ermöglicht. Die $S_o$-Schnittstelle ermöglicht den parallelen Anschluß von Einrichtungen an einem gemeinsamen busähnlichen Leitungssystem, wobei jedoch der Informationsfluß der Nutz- und Daten-/Signalisierungs-Kanäle zwischen den angeschlossenen Endgeräten und der digitalen Vermittlungsanlage, nicht jedoch untereinander möglich ist.

Eine Weiterbildung der Erfindung besteht darin, daß die Stromversorgung der Schaltungsanordnung aus dem Rechner erfolgt.

Auf diese Weise wird durch die Schaltungsanordnung die Stromversorgungseinrichtung des digitalen Fernmeldeendgeräts nicht zusätzlich belastet.

Eine Weiterbildung der Erfindung besteht darin, daß die Stromversorgungseinrichtung oder eine zustäzliche Hilfsstromversorgungseinrichtung des Rechners auf Veranlassung des digitalen Fernmeldeendgeräts ein- und ausschaltbar ist.

Durch diese Maßnahme kann der Rechner auch dann benutzt werden, wenn dieser nicht bedient oder nicht eingeschaltet ist.

Vorteilhafte Weiterbildungen der Erfindung ergeben sich aus den Unteransprüchen.

Die Erfindung wird anhand eines Ausführungsbeispiels näher erläutert, welches in der Zeichnung dargestellt ist.

Es zeigt:

Fig. 1    das Blockschaltbild eines digitalen Fernsprechapparates und

Fig. 2    das Blockschaltbild der erfindungsgemäßen Schaltungsanordnung.

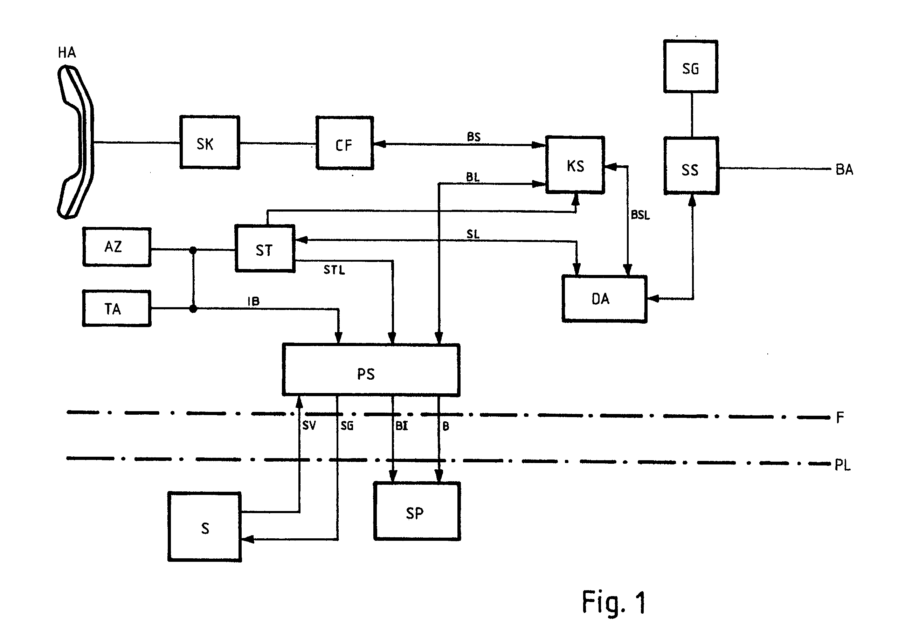

Bei dem in Fig. 1 gezeigten Blockschaltbild eines digitalen Fernsprechendgerätes wird nur auf diejenigen Einrichtungen eingegangen, die zum Verständnis der Erfindung unbedingt notwendig sind. Über den Basisanschluß BA erfolgt die Verbindung des digitalen Fernsprechendgeräts F mit einer nicht gezeigten digitalen Vermittlungsanlage, wobei der Basisanschluß BA als sog. $S_o$-Schnittstelle mit der Vollduplexübertragung von je zwei Nutz- und einem Daten-/Signalisierungs-Kanal mit jeweils 64 kbit/s bzw. 16 kbit/s ausgebildet sein kann. Die Schnittstellenschaltung SS dient einerseits zur galvanischen Trennung der Anschlußleitung des Basisanschlusses BA und zur Bereitstellung der über die Anschlußleitung BA von der digitalen Vermittlungsstelle eingespeisten Versorgungsspannung für die Stromversorgung SG des digitalen Fernsprechendgerätes F. Die Stromversorgungseinrichtung SG versorgt sämtliche Einrichtungen des Fernsprechendgerätes F mit Ausnahme der Einrichtung PS, auf die weiter unten noch näher eingegangen wird. Die digitale Anschlußeinheit DA hat die Aufgabe, den von der Schnittstellenschaltung SS ankommenden Datenstrom kanalmäßig auf die Leitung BSL für die beiden Nutzkanäle und die Daten-/Signalisierungsinformationen auf die Leitung SL aufzuteilen bzw. die auf den betreffenden Leitungen ankommenden Informationen in einen gemeinsamen Datenstrom zur Weitergabe an die Schnittstellenschaltung SS zusammenzufügen. Die Nutz-Kanal-Informationen werden dem Kanalschalter KS zugeführt, welcher die Aufgabe hat, die Nutz-Kanal-Informationen auf die Leitung BS bzw. auf die Leitung BL umzuschalten. Darüberhinaus ist der Kanalschalter KS auch in der Lage, Nutz-Kanal-Informationen von der Leitung BS auf die Leitung BL zu leiten. Die entsprechenden Steuerbefehle erhält der Kanalschalter KS von der Steuereinrichtung ST des Fernsprechendgeräts F, welcher auch die Daten-/Signalisierungs-Kanal-Informationen von der digitalen Anschlußeinrichtung DA zugeführt werden bzw. welche die entsprechenden Daten-/Signalisierungs-Kanal-Informationen für die digitale Anschlußeinrichtung DA erzeugt und über die Leitung SL zuführt.

An der Leitung BS ist ein Codec/Filter CF angeschlossen, in welchem die über einen Nutz-Kanal übertragenen digitalen Sprachinformationen in analoge Signale umgesetzt werden, welche dem elektronischen Sprechkreis SK zugeführt werden, ebenso werden im Codec/Filter die vom elektronischen Sprechkreis SK kommenden analogen Sprachsignale in digitale Sprachsignale umgesetzt zur Weitergabe auf die Leitung BS, damit diese über einen Nutz-Kanal übertragen werden können. Am elektronischen Sprechkreis SK ist der Handapparat HA mit Sprech- und Hörkapsel des Fernsprechendgeräts F angeschlossen.

Die Anzeigevorrichtung AZ und Eingabetastatur TA sind mit der Steuereinrichtung ST des Fernsprechendgerätes F über ein internes Bus-System IB verbunden, welches als sog. I²C-Bus ausgebildet sein kann. Das interne Bus-System IB dient beispielsweise zur Übertragung der Tasteninformationen der Eingabetastatur TA zur Steuereinrichtung ST und zur Übertragung von Informationen von der Steuereinrichtung ST zur Anzeigevorrichtung AZ hin, welche dort optisch angezeigt werden.

Wie bereits erwähnt, werden die Informationen des Daten-/Signalisierungs-Kanals der Steuereinrichtung ST übermittelt, wobei diese in derselben ausgewertet werden. Aufgrund der Auswertung können beispielsweise in Abhängigkeit von den über den Daten-/Signalisierungs-Kanal übermittelten Informationen entsprechende Anzeigen auf der optischen Anzeigevorrichtung AZ durch die Steuereinrichtung ST veranlaßt werden. Ebenso ist es möglich, in Abhängigkeit von Tastenbetätigungen an der Eingabetastatur TA entsprechende Informationen in der Steuereinrichtung ST zu erzeugen, die über den Daten-/Signalisierungs-Kanal zur Vermittlungsstelle übertragen werden. Die Steuerung des Kanalschalters KS ist ebenfalls in Abhängigkeit von Informationen denkbar, die über den Daten-/Signalisierungs-Kanal oder über das interne Bus-System IB zur Steuereinrichtung ST übermittelt worden sind.

Zum Anschluß eines Rechnen PC, beispielsweise eines Personalcomputers weist das digitale Fernsprechendgerät F eine besondere Schnittstellenschaltung PS auf. Diese ist an der Leitung BL zur Übermittlung der Nutz-Kanal-Informationen in beiden Richtungen, am internen Bus-System IB und an der Steuerleitung STL angeschlossen, auf die weiter unten noch näher eingegangen wird.

Der Rechner PC ist mit einer Schnittstellenschaltung SP ausgestattet, welche über die Leitungen B zur Übertragung der Nutz-Kanal-Informationen in beiden Richtungen und mit der Leitung BI zur Übertragung der Informationen des internen Bus-Systems IB in beiden Richtungen mit der Schnittstellenschaltung PS verbunden. Auf den Aufbau und die Funktion der Schnittstellenschaltung SP des Rechners PC wird im Rahmen dieser Beschreibung nicht weiter eingegangen und auf die Durckschrift ISDN-report Nr. 9, vom September 1989 auf die Seiten 27 - 31 verwiesen. Die Aufgabe der Schnittstellenschaltung SP besteht ganz allgemein darin, die Nutz-Kanal-Informationen der Verarbeitung innerhalb des Rechners PC zuzuführen bzw. die dort erzeugten Informationen für den bzw. die Nutz-Kanäle aufzunehmen und die für den Rechner PC bestimmten Informationen, welche über das interne Bus-System IB übertragen worden sind, dem Rechner PC derart zuzuführen, damit diese dort die entsprechenden Funktionen auslösen bzw. die im Rechner PC erzeugten Steuerinformationen dem internen Bus-System IB zuzuführen.

Die Stromversorgung der Schnittstellenschaltung PS des digitalen Fernsprechendgeräts F erfolgt über die Leitung SV aus der Stromversorgungseinrichtung S des Rechners PC, dabei kann hinsichtlich der Stromversorgung eine bestimmte Funktion im Rechner PC über die Leitung SG durch die Steuereinrichtung ST des digitalen Fernsprechendgeräts F veranlaßt werden.

Bei dem gezeigten Ausführungsbeispiel eines digitalen Fernsprechendgeräts F wird davon ausgegangen, daß die Übertragung der Informationen auf den Leitungen BSL, BS, BL, SL, IB, B, BI und B seriell erfolgt, es ist jedoch auch denkbar, dort wo es angebracht ist, eine parallele Übertragung der auf den genannten Leitungen übertragenen Datenworte vorzunehmen.

Der Rechner PC kann in Folge des besonderen Anschlusses am Fernsprechendgerät F beispielsweise als Anrufbeantworter arbeiten, indem entweder sofort als Folge einer zuvor entsprechend eingegebenen Tasteninformation oder nach Ablauf einer bestimmten Zeit bei einem ankommenden Anruf auf Veranlassung der Steuereinrichtung ST der betreffende Nutz-Kanal über den Kanalschalter KS zur Schnittstellenschaltung SP des Rechners PC durchgeschaltet wird, wodurch einerseits die Übermittlung eines im Rechner PC enthaltenen Ansagetextes zum angerufenen Teilnehmer und die Abspeicherung der vom rufenden Teilnehmer eintreffenden, über den Nutz-Kanal übertragenen Sprachinformationen im Rechner PC möglich ist. Im Rechner PC sind für diesen Zweck beispielsweise auf einer Festplatte Speicherbereiche für die Anrufbeantworterfunktion reserviert, welche die Ansagetexte in Form von PCM-Datenworte enthalten und die PCM-Datenworte der vom rufenden Teilnehmer gesprochenen Texte aufnehmen. Ist die Funktion "Anrufbeantworter" in der Steuereinrichtung ST des Fernsprechendgeräts F aktiviert, so erhält der Rechner PC nach dem Eintreffen der einen Anruf ankündigenden Signalisierungsinformation, die über den Daten-/Signalisierungs-Kanal von der Vermittlungsstelle zum Fernsprechendgerät F übertragen wurde, auf Veranlassung der Steuereinrichtung ST über den internen Datenbus IB eine entsprechende Information, welche das Auslesen des Ansagetextes und das spätere Einspeichern der vom rufenden Teilnehmer eintreffenden Sprachinformationen im Rechner PC veranlaßt.

Eine weitere Funktion des Rechners PC kann darin bestehen, Sprachinformationen vor ihrer Übertragung über einen Nutz-Kanal zur Vermittlungsstelle bzw. nach ihrem Eintreffen auf einem Nutz-Kanal von der Vermittlungsstelle zu ver- bzw. entschlüsseln. Zu diesem Zweck wird der Kanalschalter KS aufgrund entsprechender Tasteneingaben durch die Steuereinrichtung ST veranlaßt, die vom Codec/Filter CF erzeugten Sprachsignale von der Leitung BS auf die Leitung BL umzuleiten, so daß diese zunächst dem Rechner PC zugeführt und dort verschlüsselt werden. Anschließend erfolgt die Übermittlung der verschlüsselten Sprachsignale wieder über die Leitung BL zurück zum Kanalschalter KS, welcher diese zur Leitung BSL zur Weitergabe an die Vermittlungsstelle leitet. In umgekehrter Richtung werden die von der Vermittlungsstelle ankommenden Sprachsignale, welche über einen Nutz-Kanal übertragen wurden, zunächst dem Rechner PC zugeführt und anschließend nach der Entschlüsselung auf dem bereits beschriebenen Weg zum Codec/Filter CF weitergegeben. Vor Beginn der Sprechverbindung erhielt der Rechner PC über das interne Bus-System IB von der Steuereinrichtung ST die Mitteilung, daß eine Ver- bzw. Entschlüsselung der über die Leitung B eintreffenden Sprachsignale im Rechner PC zu erfolgen hat. Die Funktion "Ver- bzw. Entschlüsseln" kann beispielsweise durch eine entsprechende Tastenbetätigung oder auch über entsprechende Signalisierungsinformationen veranlaßt werden, die von der Teilnehmerstation des Gesprächspartners ausgesendet worden sind. Ein Teil dieser Signalisierungsinformationen kann auch die Angaben für die Grundschlüsseleinstellung und andere schlüsselbezogene Daten enthalten.

Neben den erwähnten Einsatzmöglichkeiten im Rahmen der Behandlung von digitalisierten Sprachsignalen kann der Rechner PC selbstverständlich auch im Rahmen der bekannten Datenanwendungen einschließlich der Aufnahme von Telefax-Dokumenten und zum Empfang und zur Aussendung von Telex- und Teletex-Nachrichten verwendet werden. Darüberhinaus kann mit Hilfe des Rechners PC auch der Verbindungsaufbau gesteuert werden, indem dieser Teilnehmerverzeichnisse für die verschiedenen Dienste enthält, die entweder über die Eingabetastatur TA des Fernsprechendgeräts F, falls dieses eine alpha-numerische Eingabetastatur aufweist, oder über die Eingabetastatur des Rechners PC aufgerufen werden können. Im ersteren Fall werden die Tasteninformationen über das interne Bus-System IB zum Rechner PC übertragen, während in beiden Fällen die Signalisierungsinformationen für den Verbindungsaufbau vom Rechner PC über das interne Bus-System IB zur Steuereinrichtung ST übertragen werden, welche dann die Weitergabe an die Vermittlungsstelle über den Daten-Signalisierungs-Kanal in der bereits beschriebenen Weise veranlaßt.

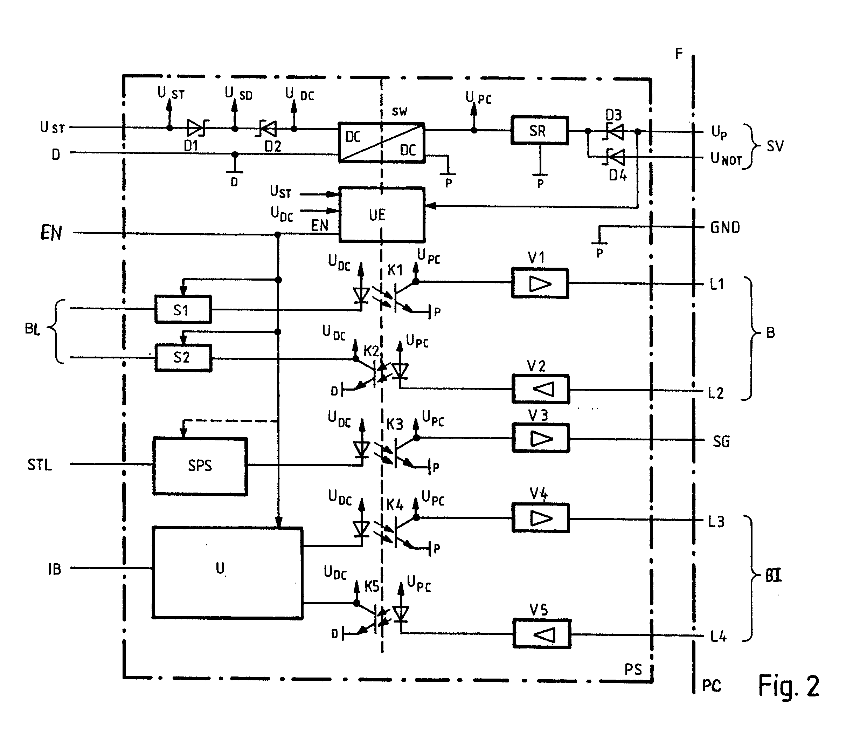

Die Schaltungsanordnung der Schnittstellenschaltung PS, deren Blockschaltbild in Fig. 2 gezeigt wird, kann als in sich geschlossene Anordnung in Form eines Moduls ausgebildet sein, wobei das Modul einen Bestandteil des digitalen Fernsprechendgerätes F bildet.

Das interne Bus-System IB ist an einen Umsetzer U angeschlossen, welcher die ankommenden Informationen auf die Leitung L3 zum Rechner PC bzw. die auf der Leitung L4 von dort eintreffenden Informationen zur Übertragung auf das interne Bus-System IB umsetzt. Im Umsetzer U findet also eine Umsetzung von einer bidirektionalen Übertragungsstrecke auf eine unidirektionale Übertragungsstrecke bzw. umgekehrt statt. Die Informationen, die über einen oder beide Nutz-Kanäle übertragen werden, treffen auf der Leitung BL ein und werden an die Leitung L1 zum Rechner PC weitergegeben bzw. die von dort auf der Leitung L2 eintreffenden Informationen werden an die Leitung BL zur Übertragung auf einen Nutz-Kanal weitergegeben.

Zur galvanischen Entkoppelung zwischen dem Fernsprechendgerät F und dem Rechner PC sind in die genannten Leitungen die Optokoppler K1, K2, K4 und K5 eingeschleift. Zur Verstärkung der abgehenden bzw. ankommenden Signale sind die Verstärker V1, V2, V4 und V5 vorgesehen.

Die Stromversorgung der Schnittstellenschaltung PS erfolgt über die Leitung SV oder genauer gesagt, im Normalfall über die Leitung $U_P$. Der Spannungsregler SR setzt die Versorgungsspannung aus dem Rechner PC in Höhe von 9 Volt auf die benötigte Versorgungsspannung $U_{PC}$ von 5 Volt herunter. Mit dieser Spannung $U_P$ werden die Verstärker V1 - V5 und die Optokoppler K1 - K5 versorgt. Zur galvanischen Trennung ist ein DC/DC-Spannungswandler vorgesehen, welcher die Spannung $U_{DC}$ für die Versorgung der apparateseitig betriebenen Einrichtungen der Schnittstellenschaltung PS erzeugt. An der Schnittstellenschaltung PS ist auch die Versorungsspannung $U_{ST}$ angeschlossen, sie ist jedoch nicht wirksam, da diese durch die Diode D2 gesperrt wird. Auf der Apparateseite ist die Erde D des Fernsprechendgerätes F angeschlossen, während auf der Rechnerseite die Erde GND des Rechners PC angeschlossen ist. Das Vorliegen der Versorgungsspannung $U_P$ des Rechners PC in der Schnittstellenschaltung PS wird durch die Überwachungseinrichtung UE überwacht und bei Ausbleiben derselben über die Leitung EN die Leitungen BL, STL und das interne Bus-System IB abgetrennt und zwar entweder durch integrierte Schalteinrichtungen in den Einrichtungen SPS und U oder über besondere Schalteinrichtungen S1 und S2, welche in die Leitungen BL eingeschleift sind.

Es ist möglich, den Rechner PC mit einer besonderen Stromversorgungseinrichtung auszustatten, welche die Versorgungsspannung $U_{NOT}$ liefert. Das Einschalten dieser besonderen Stromversorgungseinrichtung kann über die Leitung STL durch die Steuereinrichtung ST des digitalen Fernsprechendgerätes F (Fig. 1) erfolgen. Dieses Signal gelangt an die Stromversorgungssteuereinrichtung SPS und veranlaßt über den Optokoppler K3 und den Verstärker V3 die Aussendung eines Signals auf der Leitung SG zum Rechner PC. Ist eine derartige zusätzliche Stromversorgungseinrichtung im Rechner PC vorhanden, dann darf natürlich die Stromversorgungssteuereinrichtung SPS bei Nichtvorhandensein der Versorgungsspannung $U_P$ über die Leitung EN durch die Überwachungseinrichtung UE nicht gesperrt werden, dies ist durch die gestrichelte Linie angedeutet. Die Dioden D3 und D4 dienen zur Entkoppelung der beiden Spannungszuführungen $U_P$ und $U_{NOT}$. Die Überwachungseinrichtung UE ist ebenfalls eingangs- und ausgangsmäßig galvanisch getrennt.

Bei der Darstellung in Fig. 2 wird davon ausgegangen, daß die Leitung BL aus zwei Leitungen besteht, wobei die eine Leitung in Vorwärts- und die andere in Rückwärtsrichtung betrieben wird. Dies gilt selbstverständlich auch für die in Fig. 1 gezeigten Leitungen BS und evtl. auch BSL. Hierdurch wird der Aufbau des Kanalschalters KS einfacher und übersichtlicher, welcher übrigens auch noch zur Ableitung der internen Takte aus dem von der Vermittlungsstelle ankommenden Datenstrom herangezogen wird (Fig. 1).

Die Überwachungseinrichtung UE überwacht nicht nur das Vorhandensein der Versorgungsspannung $U_P$ des Rechners PC, sondern auch die Ausgangsspannung $U_{DC}$ des Spannungswandlers SW und das Vorliegen der Versorungsspannung $U_{ST}$ des Fernsprechendgerätes F. Dabei ist zu bemerken, daß bei Ausfall der beiden zuletzt genannten Spannungen in jedem Fall das Signal EN bei allen genannten Einrichtungen wirksam wird, auch wenn die Versorgungsspannung $U_P$ des Rechners PC vorhanden ist. Auf diese Weise wird sowohl die Funktion des Spannungswandlers SW überwacht als auch ungewollte Betriebszustände vermieden. Die Leitung EN kann (gestrichelt dargestellt) auch zum Fernsprechendgerät F geführt werden, dabei ist es möglich, in demselben das Signal EN zu überwachen und in Abhängigkeit von diesem Signal die Einschaltung der Versorgungsspannung $U_{NOT}$ im Rechner PC zu veranlassen.

**Patentansprüche**

1. Schaltungsanordnung zum Anschluß eines, eine eigene Stromversorgungseinrichtung aufweisenden Rechners an einem digitalen Fernmelde-, insbesondere Fernsprechendgerät mit einem internen Bus-System, welches eine Schnittstelle für den Basisanschluß mit zwei Nutz- und einem Daten-/Signalisierungs-Kanal zur Verbindung mit einer digitalen Fernmeldevermittlungsanlage und u. a. einen Kanalschalter für die Verteilung bzw. Zusammenfügung der Nutzkanalinformationen zu/von einem Codec/Filter bzw. zu/von einer Schnittstelle zum Anschluß externer Einrichtungen aufweist, wobei der Rechner mit einer entsprechenden Anschlußschnittstelle versehen ist, dadurch gekennzeichnet, daß der Rechner (PC) an einem ersten Leitungspaar (L1, L2) zur Übertragung der Nutz-Kanal-Informationen in jeweils einer von beiden Richtungen und am internen Bus-System (IB) des Fernmeldeendgeräts (F) angeschlossen ist.

2. Schaltungsanordnung nach Anspruch 1, dadurch gekennzeichnet, daß ein Unidirektional-/Bidirektional-Umsetzer (U) am internen Bus-System (IB) des Fernmeldeendgeräts (F) angeschlossen ist und der Umsetzer (U) über ein zweites Leitungspaar (L3, L4) für je eine Richtung mit dem Rechner (PC) verbunden ist.

3. Schaltungsanordnung nach einem der Ansprüche 1 oder 2,
dadurch gekennzeichnet,
daß die Stromversorgung der Schaltungsanordnung (PS) aus dem Rechner (PC) erfolgt.

4. Schaltungsanordnung nach Anspruch 3,
dadurch gekennzeichnet,
daß die Spannung der Stromversorgung in der Schaltungsanordnung (PS) durch eine Überwachungseinrichtung (UE) überwacht wird.

5. Schaltungsanordnung nach einem der Ansprüche 1 bis 4,
dadurch gekennzeichnet,
daß bei fehlender Versorgungsspannung durch die Überwachungseinrichtung (UE) die ersten (L1, L2) und die zweiten (L3, L4) Leitungspaare auf Veranlassung der Überwachungseinrichtung (UE) für die Dauer des Fehlens der Versorgungsspannung abgetrennt werden.

6. Schaltungsanordnung nach Anspruch 3 oder 4,
dadurch gekennzeichnet,
daß die Stromversorgung des Fernmeldeendgeräts (F) durch die Überwachungseinrichtung (UE) überwacht wird.

7. Schaltungsanordnung nach einem der Ansprüche 1 bis 6,
dadurch gekennzeichnet,
daß die Stromversorgungseinrichtung (S) oder eine zusätzliche Hilfsstromversorgungseinrichtung des Rechners (PC) auf Veranlassung des digitalen Fernmeldeendgeräts (F) ein- und ausschaltbar ist.

8. Schaltungsanordnung nach einem der Ansprüche 1 bis 7,
dadurch gekennzeichnet,
daß sämtliche Verbindungen einschließlich Stromversorgungsleitung zwischen Rechner (PC) und Fernmeldeendgerät (F) galvanisch getrennt sind.

9. Schaltungsanordnung nach einem der Ansprüche 1 bis 8,
dadurch gekennzeichnet,
daß diese einen Bestandteil des Fernmeldeendgeräts (F) bildet.

10. Schaltungsanordnung nach Anspruch 9,
dadurch gekennzeichnet,
daß diese als Modul ausgebildet und in das Fernmeldeendgerät (F) einsetzbar ist.

Fig. 1

EP 0 451 523 A2

Fig. 2

EP 0 451 523 A2